# EUROPEAN PATENT APPLICATION

(11) **EP 3 663 037 A1**
(43) Date of publication of application: **10.06.2020**
(21) Application number: 19213227.2
(22) Date of filing: 03.12.2019
(51) Int. Cl.: B23Q 11/08

(54) **PROTECTIVE DEVICE FOR A PRODUCTION MACHINE**

(30) Priority: 05.12.2018 IT 201800010843
(71) Applicant: P.E.I. Protezioni Elaborazioni Industriali S.r.l., 40012 Calderara di Reno (Bologna) (IT)
(72) Inventor: BENEDETTI, Michele, 40132 Bologna (IT); MACCAFERRI, Fabio, 40010 Sala Bolognese (Bologna) (IT)
(74) Representative: Milli, Simone

(57) **Abstract**

Described is a protective device (1) for a machine for processing products comprises, in combination, the following features:
- a bellows-like protective element (2), defining a plurality of peaks (2A) and troughs (2B);
- a plurality of stiffening beams (3), coupled to the bellows-like element (2) internally;
- a plurality of fastening elements (4), fixed to the bellows-like element (2) and to the stiffening beams (3);
- a plurality of supporting elements (5), positioned outside the bellows-like element (2), to which are fixed the fastening elements (4).

## Description

This invention relates to a protective device for a production machine.

There are various prior art devices for production machines (e.g. machine tools) which comprise a protective element of the bellows-like type, designed to generally cover a zone above an operating head designed to process parts or components.

A strongly felt need is that of providing a protective device which is particularly robust, silent at high speeds and able not to move out of position during movement.

In this context, the technical purpose which forms the basis of the invention is to provide a protective device for a production machine which is particularly robust and able to operate at high speeds without moving out of position.

A further technical aim which forms the basis of this invention is to provide a protective device for a production machine which is particularly silent at high speeds.

A further technical aim which forms the basis of this invention is to provide a protective device for a production machine which is particularly compact.

The invention is described below with reference to the accompanying drawings, which illustrate a non-limiting embodiment of it, in which:
- Figure 1 is a perspective view of a protective device according to the invention.
- Figure 2 is a perspective view of a detail of the device of Figure 1;

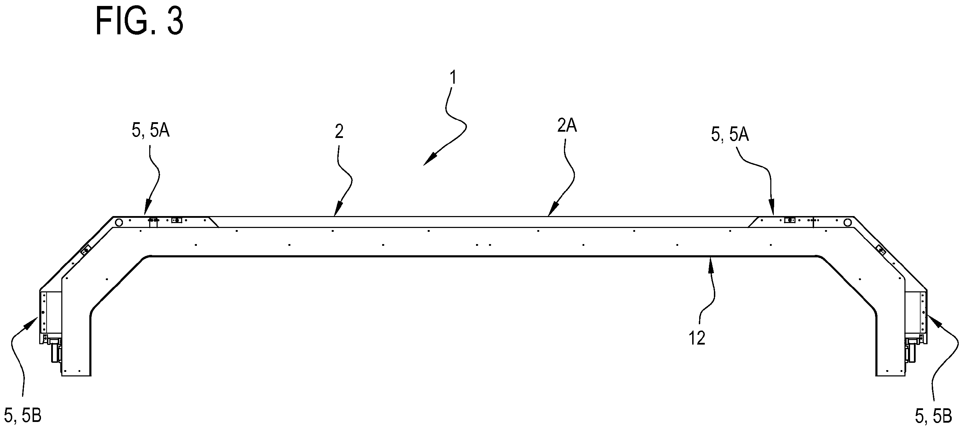

- Figure 3 is a view of the device of Figure 1;

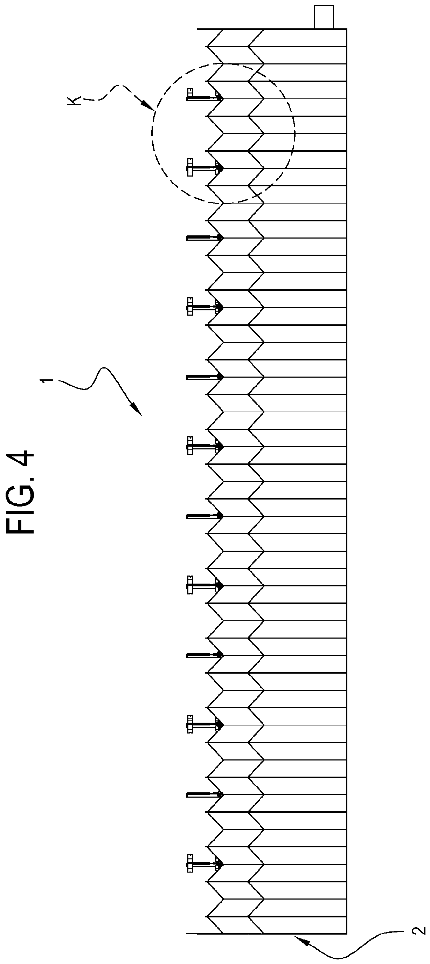

- Figure 4 shows a detail according to a side view of the device of Figure 1;

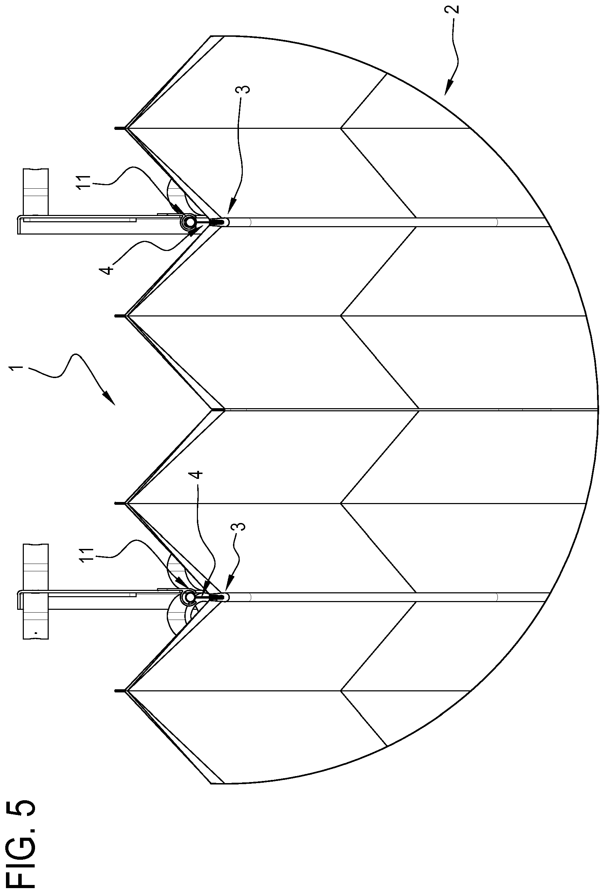

- Figure 5 shows a detail according to a side view of a detail K of the device of Figure 1;

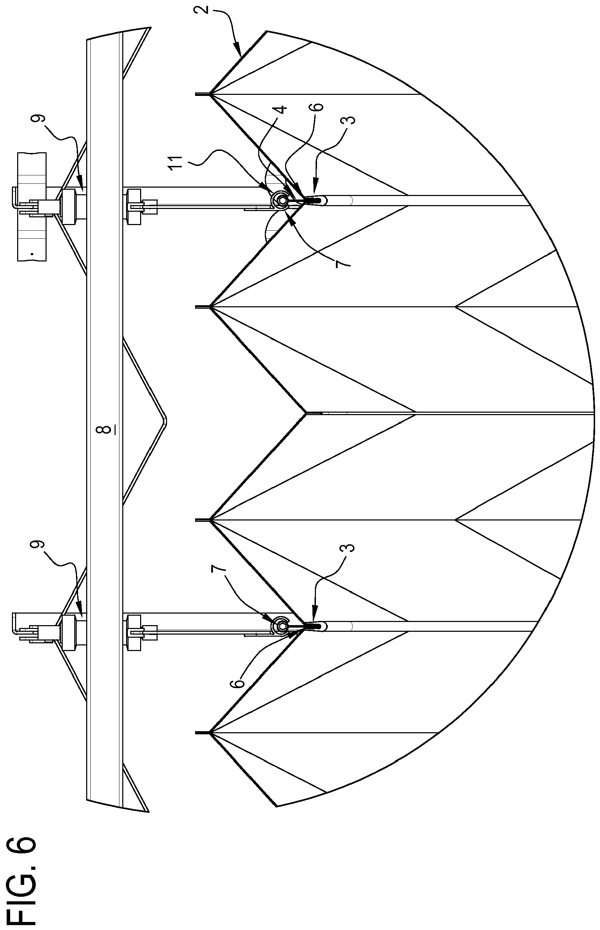

- Figure 6 shows a detail according to view from below of a detail of the device of Figure 1.

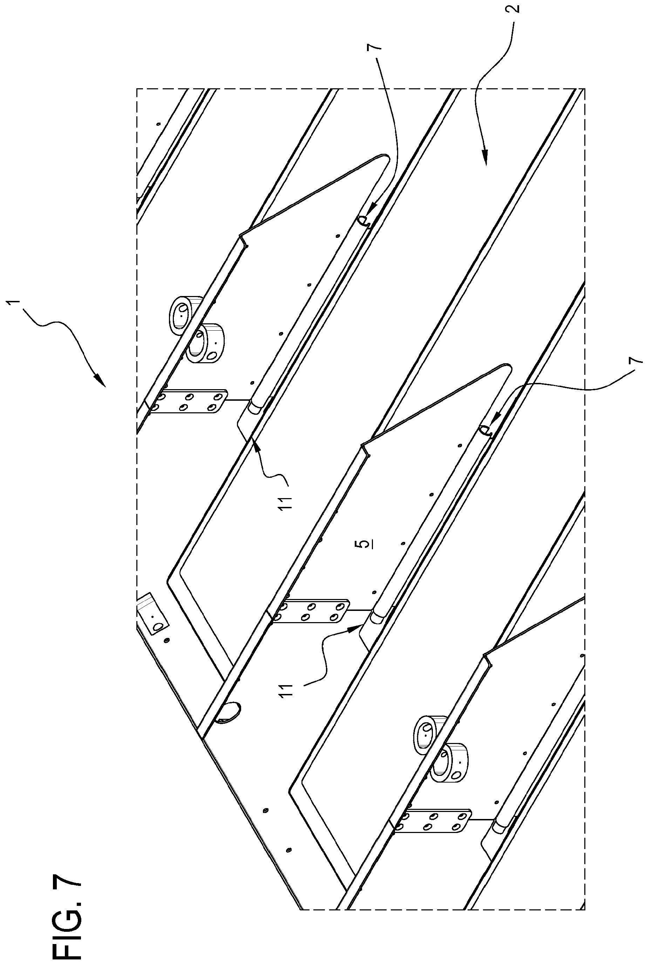

- Figure 7 is an enlarged view of a detail of Figure 1;
- Figure 8 illustrates a coupling diagram of some elements of the device of the preceding drawings;
- Figure 9 illustrates a detail of the coupling diagram of Figure 8.

With reference to the accompanying drawings, the numeral 1 denotes in its entirety a protective device according to the invention.

The protective device 1 is designed to be used to protect parts of a machine for processing products (for example, a machine tool).

The processing machine is not illustrated in the accompanying drawings.

The operating head of the processing machine is normally positioned below the protective device 1, that is to say, the protective device 1 covers the ceiling of the operating zone of the processing head.

According to the invention, the protective device 1 for a machine for processing products comprises, in combination, the following features:
- a bellows-like protective element 2, defining a plurality of peaks 2A and troughs 2B;
- a plurality of stiffening beams 3, coupled to the bellows-like element 2 underneath;
- a plurality of fastening elements 4, fixed to the bellows-like element 2 and to the stiffening beams 3;
- a plurality of supporting elements 5, positioned outside (at the top and laterally outside) the bellows-like element 2, to which the fastening elements 4 are fixed.

Preferably, the bellows-like protective element 2 is an element made of plastic material.

Preferably, the bellows-like protective element 2 is made of translucent material.

According to another aspect, the fastening elements 4 have an enlarged portion 4A.

According to another aspect, each supporting element 5 comprises an upper portion 5A, positioned above the bellows-like element 2, and a lateral portion 5B positioned laterally outside the bellows-like element 2, the upper and lower portions 5A, 5B being connected together.

It should be noted that the term "inside" means in the zone (protected) inside the device 1 whilst the term "outside" means in the zone outside the device 1.

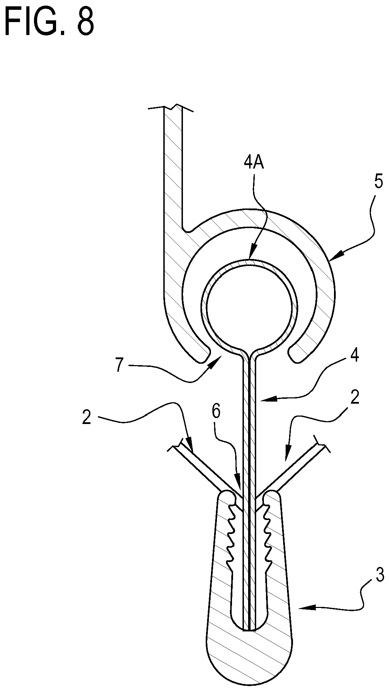

According to yet another aspect, the stiffening beams 3 are equipped with a housing cavity 6 in which are blocked portions of the troughs 2B of the bellows-like element 2 and portions of the fastening elements 4 (as is schematically illustrated in Figure 8).

In particular, it should be noted that the portions of the troughs 2B of the bellows-like element 2 are sewn together (more generally, locked).

In other words, the bellows-like element 2 comprises a plurality of flaps, which define the above-mentioned troughs and peaks, suitably connected to each other (e.g. sewn, welded, etc.).

The fastening element is inserted in the cavity 6 until abutting, from the outside inwards, the portions of the troughs 2B of the bellows-like element 2.

As clearly shown in Figure 8, the portions of the troughs 2B of the element 2 and the fastening element 4 are locked integrally inside the cavity 6 for housing the stiffening beam 3.

In other words, it should be noted that both the troughs 2B of the bellows-like element 2 and the portions of the fastening elements 4 are inserted (and locked) in the housing cavity 6.

Preferably, each stiffening beam 3 is made of metallic material, preferably aluminium.

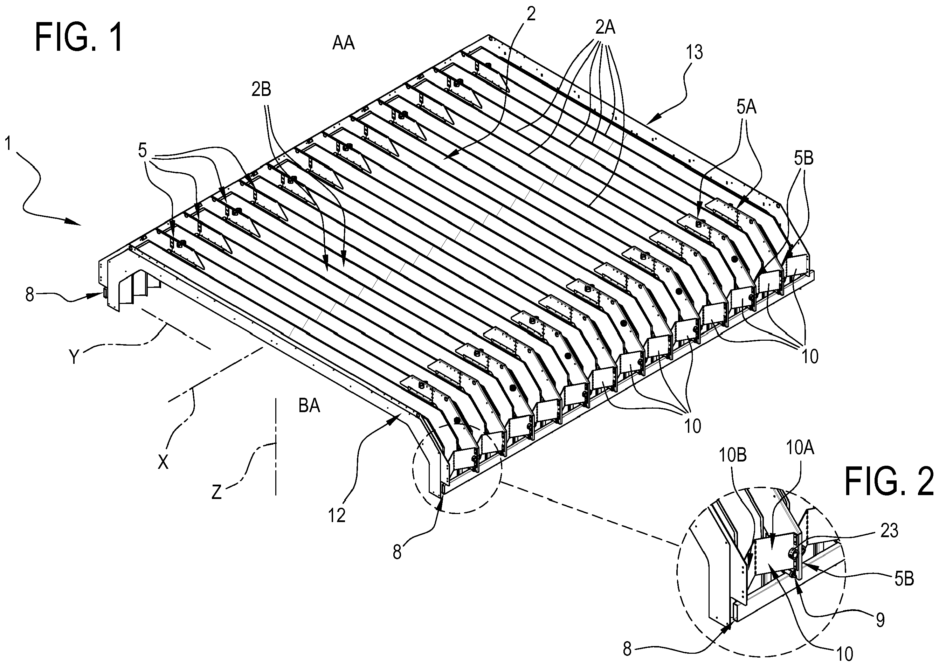

Figure 1 shows the directions X (hereinafter also referred to as longitudinal direction), Y (transversal direction) and Z (vertical direction).

The beams 3 extend along a transversal direction Y.

The bellows-like element 2 is moved along the direction X.

Further, the reference BA in Figure 1 denotes the zone beneath the device 1 (inner zone) and AA denotes the zone above the device 1 (outer zone).

The housing cavity 6 extends along the transversal direction Y.

According to another aspect, the troughs 2B of the bellows-like element 2 and the portions of the fastening elements 4 are locked in the housing cavities 6 following a plastic deformation (crimping) of the stiffening beams 3 at the housing cavities 6.

It should be noted that the protective device 1 comprises two head ends 12, 13.

A supporting element 5 is fixed to each head end 12, 13 or it defines a supporting element 5.

Preferably, each of the head ends 12, 13 is in the shape of an upturned U.

Preferably, one of the head ends 12, 13 is fixed relative to the frame of the machine whilst the other of the head ends 12, 13 is movable, that is to say, movable as one or in phase relationship with the operating head of the machine.

One of the head ends 12, 13 is movable, preferably, along the direction X.

It should be noted that, in this way, thanks to the movement of one of the head ends 12, 13, the bellows-like element 2 is moved from an end configuration of maximum extension (corresponding to an occupied surface, that is, covered in a maximum plan view) to an end configuration of minimum extension or withdrawal (corresponding to an occupied surface, that is, covered in a minimum plan view).

According to another aspect, the supporting elements 5 comprise a cavity 7 for housing the fastening elements 4.

With reference to the upper portion 5A of the supporting elements 4, the cavity 7 for housing the fastening elements 4 is beneath; however, with reference to the lateral portion 5B of the supporting elements 4, the housing cavity 7 is positioned facing (open) towards the inside.

According to another aspect, the protective device 1 comprises at least one pair of guides 8, positioned on both sides and below the protective bellows-like element 2.

The guides 8 extend along the direction X.

The guides 8 are fixed relative to the frame of the machine on which the device 1 is installed.

The supporting elements 5 comprise contact elements 9 designed to make contact with the guides 8 and configured to be movable along the guides 8.

Preferably, the contact elements 9 are rolling elements (cylinders, wheels, etc.).

According to another aspect, the protective device 1 further comprises a plurality of elements 10 for stabilising the position.

Each of the elements 10 for stabilising the position, as clearly shown in Figure 1, is positioned between, and connected to, a supporting element 5 and between/at another supporting element 5 adjacent to it.

In other words, each stabilising element 10 is interposed between a pair of adjacent supporting elements 5 (connecting them).

As clearly shown in Figure 2, each stabilising element 10 is locked by means of a plate 23 to the supporting element 5.

According to another aspect, it should be noted that each element 10 for stabilising the position comprises two portions 10A, 10B movable relative to each other between an end configuration of maximum extension (corresponding to the bellows-like element 2 extended, that is, in the configuration of maximum extension) and an end configuration of minimum extension (corresponding to the bellows-like element 2 retracted, that is, in the configuration of minimum extension).

According to another aspect, each element 10 for stabilising the position comprises a vertical centre-line 10C subdividing of the two portions (10A, 10B) movable relative to each other.

Preferably, each element 10 for stabilising the position is made of plastic material, preferably polypropylene.

It should be noted that the function of the element 10 for stabilising the position is to ensure that the bellows-like element does not undergo, during the passage between the limit configurations of maximum extension and minimum extension, oscillations (rotational) about the pitching axis (Y) or yawing axis (Z) due to the imperfect movement which may occur.

This feature therefore advantageously makes it possible to stabilise and make the device 1 more precise, silent and high performing even at high operating speeds of movement of the bellows-like element 2.

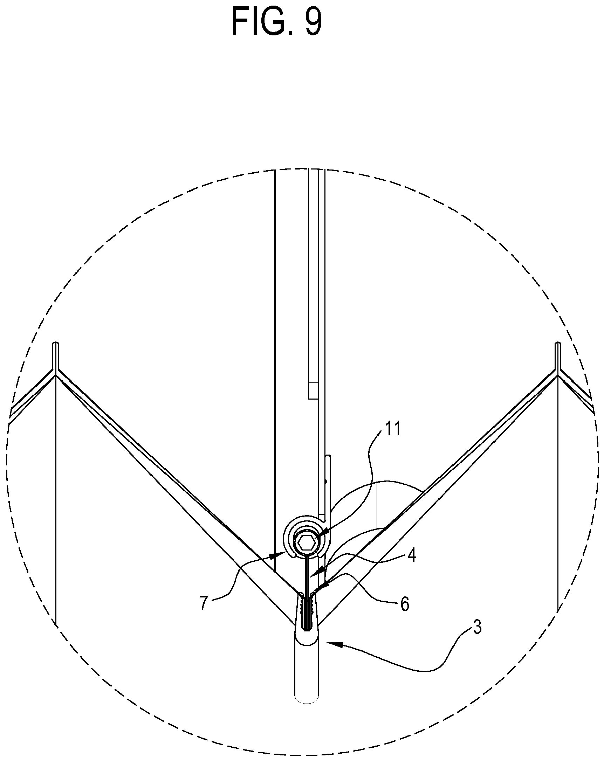

Preferably, the device 1 also comprises connection means 11, better illustrated in Figure 9, configured to be inserted and locked in the lower housing cavity 7 and define a constraint to the movement (along the longitudinal direction of extension of the housing cavity 7) of the fastening elements 4 inside the lower housing cavity 7.

Preferably, the constraining means 11 are configured to be screwed in the housing cavity 7.

In other words, the connection means 11 are equipped with threads.

The connection means 11 make contact with the fastening element 4, and limit the movements inside the housing cavity 7.

In this way, advantageously, the device 1 is particularly stable even at high operating speeds and is not adversely affected, over time, by settlements or decrease in performance.

It should be noted that, with regard to the upper portion 5A of a supporting element 5, the connection means 11 are inserted laterally from the outer part of the cavity 7, whilst with regard to the lateral portion 5B of a supporting element 5, the connection means 11 are inserted from beneath in the cavity 7.

## Claims

1. A protective device (1) for a machine for processing products, **characterised in that** it comprises, in combination, the following features:
- a bellows-like protective element (2), defining a plurality of peaks (2A) and troughs (2B);
- a plurality of stiffening beams (3), coupled to the bellows-like element (2) internally;
- a plurality of fastening elements (4), fixed to the bellows-like element (2) and to the stiffening beams (3);
- a plurality of supporting elements (5), positioned outside the bellows-like element (2), to which are fixed the fastening elements (4).

2. The protective device (1) according to the preceding claim, wherein the fastening elements have an enlarged portion (4A).

3. The protective device (1) according to any one of the preceding claims, wherein the stiffening beams (3) are equipped with a housing cavity (6) in which are blocked portions of the troughs (2B) of the bellows-like element (2) and portions of the fastening elements (4).

4. The protective device (1) according to any one of the preceding claims, wherein the troughs (2B) of the bellows-like element (2) and portions of the fastening elements (4) are blocked in the housing cavities (6) following a plastic deformation of the stiffening beams (3) at the housing cavity (6).

5. The protective device (1) according to any one of the preceding claims, wherein the supporting elements (5) comprise a cavity (7) for housing the fastening elements (4).

6. The protective device (1) according to any one of the preceding claims, comprising at least a pair of guides (8), positioned on both sides and below the protective bellows-like element (2), and wherein the supporting elements (5) comprise contact elements (9) designed to make contact with the guides (8) and configured to be movable along the guides (8).

7. A protective device (1) according to the preceding claim, wherein the contact elements (9) are rolling elements.

8. The protective device (1) according to any one of the preceding claims, further comprising a plurality of elements (10) for stabilising the position, each of the elements (10) for stabilising the position being connected to a supporting element (5) and to another supporting element (5) adjacent to it.

9. The protective device (1) according to any one of the preceding claims, wherein each element (10) for stabilising the position comprises two portions (10A, 10B) movable relative to each other between a maximum extension configuration and a minimum extension configuration.

10. The protective device (1) according to any one of claims 8 to 10, wherein each element (10) for stabilising the position comprises a vertical centre-line (10C) subdividing of the two portions (10A, 10B) movable relative to each other.

11. The protective device (1) according to any one of claims 8 to 10, wherein each element (10) for stabilising the position is made of plastic material, preferably polypropylene.

12. The protective device (1) according to any one of the preceding claims, wherein the supporting elements (5) comprise a cavity (7) for housing the fastening elements (4) and comprise connection means (11), configured to be inserted and locked in the housing cavity (7) and define a constraint to the movement of the fastening elements (4) inside the housing cavity (7).

13. The protective device (1) according to preceding claim, wherein the constraining means (11) are configured to be screwed in the housing cavity (7).

14. The protective device (1) according to any one of the preceding claims, wherein each supporting element (5) comprises an upper portion (5A), positioned above the bellows-like element (2), and a lateral portion (5B) positioned laterally outside the bellows-like element (2), the upper and lower portions (5A, 5B) being connected together.
